# EUROPÄISCHE PATENTSCHRIFT

(11) **EP 4 304 911 B1**
(45) Veröffentlichungstag und Bekanntmachung des Hinweises auf die Patenterteilung: **28.01.2026**
(21) Anmeldenummer: 22707411.9
(22) Anmeldetag: 18.02.2022
(51) Int. Cl.: B61B 13/00, E01B 25/28, B60B 17/00

(54) **TRÄGER EINES SCHIENEN-FLURFÖRDERERS UND SCHIENEN-FLURFÖRDERER MIT TRÄGER**
SUPPORT OF A TRACK FLOOR CONVEYOR, AND TRACK FLOOR CONVEYOR WITH SUPPORT
DISPOSITIF DE SOUTIEN D'UN CONVOYEUR AU SOL À PISTE ET CONVOYEUR AU SOL À PISTE DOTÉ D'UN DISPOSITIF DE SOUTIEN

(30) Priorität: 12.03.2021 DE 102021001337
(43) Veröffentlichungstag der Anmeldung: 17.01.2024
(73) Patentinhaber: Siempelkamp Transport Systems GmbH, 33758 Schloss Holte-Stukenbrock (DE)
(72) Erfinder: BÜLLESBACH, Tim, 33824 Werther (DE); SCHAFFRINSKI, Dominik, 32756 Detmold (DE); REHLING, Stefan, 31675 Bückeburg (DE)
(74) Vertreter: Ter Meer Steinmeister & Partner
(86) Internationale Anmeldenummer: PCT/EP2022/054078
(87) Internationale Veröffentlichungsnummer: WO 2022/189123

(56) Entgegenhaltungen:
- EP-A2- 1 155 937
- DE-C1- 4 318 383
- DE-U1- 202019 100 904
- STROTHMANN MACHINES & HANDLING GMBH: "Spurgeführte FTS von Strothmann - Präzision und Energieeffizienz bei der Fließmontage bis 100 t", 9 July 2020 (2020-07-09), XP055927213, Retrieved from the Internet <URL:https://www.youtube.com/watch?v=OiNpp32zf6g> [retrieved on 20220530]

## Beschreibung

Die Erfindung betrifft einen Träger eines Schienen-Flurförderers, der ein Hohlprofil umfasst, dessen wenigstens ein Hohlraum von einer Wandung umschlossen ist.

Die Erfindung betrifft ferner einen Schienen-Flurförderer mit einem derartigen Träger, dessen Räder in Kontakt mit wenigstens einem Schienenpaar aus Schienen stehen und der auf diesen verfahrbar ist, wobei der Schienen-Flurförderer auf einer Ladefläche mit einer Last beladbar ist.

Bei den hier angesprochenen Schienen(paaren) handelt es sich in erster Linie, aber nicht einschränkend, um die von der Anmelderin vertriebenen Schienen gemäß der DE 4318383 C1 oder der WO 2014/032699 A1. Diese Art von Rundschienen hat sich in der Praxis bestens bewährt, weil sie einfach aufgebaut und somit leicht herstellbar sind. Außerdem kann über das Rundprofil ein Schienen-Flurförderer (im Folgenden kurz als Flurförderer bezeichnet) mit konkaven Radauflageflächen sicher geführt werden. Die besondere Form der Laufrollen ermöglicht einen sehr geringen Rollwiderstand und eine exakte Führung des Systems. Selbst tonnenschwere Objekte lassen sich von Hand bewegen. Ein weiterer Vorteil für Fabrikationshallen besteht darin, dass die Schiene nahezu bündig mit dem Fußboden verlegt werden kann, so dass andere Fahrzeuge in ihrer Bewegungsfreiheit nicht eingeschränkt sind. Im Gegensatz zu U-förmigen Schienen, in denen die Räder der Flurförderer laufen, ist die Verschmutzungsgefahr der Schienen deutlich verringert.

Die Flurförderer und Schienensysteme werden häufig für eine Fließfertigung genutzt. Das heißt, die Flurförderer werden mit einer Last beladen, zu weiteren verschiedenen Stationen gefahren, wo die Last behandelt wird, und schließlich wieder entladen.

Diese Lasten können in Gewicht und Abmessungen von Einsatzort zu Einsatzort stark variieren. Bei der Herstellung dieser Flurförderer müssen je nach Betreiberwunsch individuell angefertigte Fahrzeuge gebaut werden. In der Regel weisen diese heutzutage geschweißte Stahlrahmenkonstruktionen auf, deren Abmessungen sich nach Größe der zu transportierenden Lasten ausrichtet. Diese Rahmenkonstruktionen sollten entsprechend steif und unanfällig gegen Wärmeeinflüsse sein, was in der Regel zu einem hohen Gewicht führt.

Zurzeit werden in zwar zufriedenstellender aber dennoch aufwändiger Art und Weise Radkassetten mit einem oder mehreren gelagerten Rädern gebaut, die mit der zuvor geschaffenen Stahlrahmenkonstruktion verbunden werden müssen. Ein solches Kassettengehäuse geht beispielhaft aus der DE 20 2019 100 904 U1 hervor. Dabei muss verständlicherweise die Spurbreite der Schienen genau eingehalten werden.

EP 1155937 beschreibt einen Wagen für Schienensysteme mit im wesentlichen rechtwinkligen Schienenkreuzen, der mit anhebbaren und absenkbaren Rollen versehen ist, die durch Absenkung in Eingriff mit und durch Anhebung außer Eingriff mit einem der Schienenpaare gebracht werden können. Aus dem Video "Spurgeführte FTS von Strothmann - Präzision und Energieeffizienz bei der Fließmontage bis 100 t", XP055927213, https://www.youtube.com/watch?v=OiNpp32zf6g ist ein Schienen-Flurförderer gemäß dem Oberbegriff des Anspruchs 1 bekannt.

Es ist die Aufgabe der Erfindung, den Aufbau und den Fertigungsaufwand eines Schienen-Flurförderers zu vereinfachen.

Die Aufgabe wird hinsichtlich eines Schienen-Flurförderers mit den Merkmalen des Anspruchs 1 und insbesondere dadurch gelöst, dass die Wandung auf der zu den Schienen angrenzenden Seite wenigstens eine nutförmige Vertiefung aufweist, in die die Achse oder das Achslager eines oder mehrerer Räder unterbringbar ist und die Wandung eine Aussparung für zumindest einen Teil eines Rades aufweist.

Man kann dadurch die Achse oder ein Achslager in den Träger versenken und sie dort festsetzen. In jedem Fall ist die Radachse in der Vertiefung untergebracht und somit vor Verschmutzung und Kollisionen geschützt. Für die Vertiefung ist in dem Bereich für die Unterbringung der Radlagerungen eine nach unten weisende Öffnung in der Breite der Radachsen oder -lager notwendig. Die Radachsen oder -lager können dann einfach in die Vertiefung eingesetzt werden, wenn es eine Aussparung, beispielsweise eine Materialausfräsung im Trägerprofil für das Rad selbst gibt. Die Aussparung befindet sich in den Bereich des Hohlprofils bzw. an der Stelle des Trägers, der im späteren Betrieb des Flurförderers genau oberhalb einer Schiene liegt. Von Vorteil ist es auch, wenn der Träger eine Länge aufweist, die die Spurweite übergreift. Da die Spurweite bekannt ist, ist dann in der Wandung im Abstand der Spurweite jeweils eine Aussparung für zumindest einen Teil eines Rades vorgesehen.

Es ist von Vorteil, wenn die Vertiefung sich über die Trägerlänge erstreckt.

In diesem Fall ist nur ein Trägerprofil notwendig um einen Flurförderer für verschiedene Spurweiten zu bauen. Je nach Größe der Aussparung für die Räder können die Räder bei Bedarf sogar spurweitenverändernd verschiebbar sein. Dabei bleibt die Achse in der Vertiefung.

Bevorzugt ist die Vertiefung in ihrer äußeren Kontur dem Umriss der Achse oder des Achslagers eines oder mehrerer Räder angepasst.

Das hat zur Folge, dass die Achse oder das Achslager von der Außenseite des Trägers in die Vertiefung einsetzbar ist und beispielsweise dort mit Haltemitteln fixiert wird. Dabei hat eine Achse in der Regel einen kreisförmigen Querschnitt, so dass die die Vertiefung in der Wandung an ihrer tiefsten Stelle sinnvollerweise halbrund ausgeformt ist. Das gleiche gilt wenn ein Achslager verwendet wird, das beispielsweise in Form eines Kugel- oder Rollenlagers um einen Achszapfen am Rad vorliegt. Aber es ist auch möglich, die Vertiefung zumindest nahezu rechteckig auszuführen, um dann darin einen kleinen Lagerblock unterbringen zu können.

Mit Vorteil weist der Träger eine lösbare Klemmvorrichtung für die Achse oder das Achslager auf.

Wenn statt der potenziellen Verschraubung der Haltemittel für Achse oder Achslager eine lösbare Klemmvorrichtung eingesetzt wird, kann am Aufstellungsort der Radabstand noch einmal exakt auf die Spurbreite der Schienen justiert werden.

Als einfache und vorteilhafte Möglichkeit ist eine die Vertiefung überbrückende Lasche vorgesehen, mit der die Achse oder das Achslager in der Vertiefung fixierbar ist.

Eine solche Lasche kann über eine einfache Schraubverbindung in der Wandung des Hohlprofils befestigt werden und fixiert das Rad, indem es die Lagerung überspannt.

Bevorzugt ist in die Vertiefung wenigstens ein Druck- oder Kraftsensor zwischen Wandung und Achse oder Achslager integriert.

Mit einem solchen Sensor sind die Kräfte auf das Rad oder Radlager zu ermitteln. Bei zu hohen Lasten könnte die Lagerung Schaden nehmen und durch die Sensoren kann in diesem Fall ein Alarm ausgelöst werden. Sind mehrere Druck- oder Kraftsensoren vorhanden, also beispielsweise unter vier Rädern, so lassen sich auch ungleichmäßige Lastverteilungen auf die Ladefläche des Flurförderers ermitteln.

Es ist von Vorteil, wenn die Aussparung der Wandung für die Räder eine Einkapselung aufweist.

Dadurch kann kein Schmutz von den Rädern in den Hohlraum des Trägers gelangen.

Es ist bevorzugt, wenn das Hohlprofil ein Strangpressprofil umfasst.

Ein solches Profil ist einfach herstellbar. In der Regel sollte es aus Aluminium oder einer Aluminiumlegierung erzeugt sein. Diese sind in den Abmessungen und Steifigkeiten anpassbar, heutzutage als Zukaufteile leicht zu beschaffen und mit passenden Verbindungselementen leicht zu verschrauben. Es entfallen die bislang üblichen Schweißarbeiten bei Stahlblech- und Stahlprofil-Rahmen. Ein solches Strangpressprofil ist auch deutlich leichter als eine festigkeitsmäßig vergleichbare Stahlblech-Schweißkonstruktion. An den Enden kann es über Deckel verschlossen werden.

Alternativ ist es bevorzugt, wenn das Hohlprofil ein Strangziehprofil umfasst.

In diesem Fall wird ebenfalls ein leichtes Material für die Hohlprofile verwendet, insbesondere faserverstärkter Kunststoff. Auch diese Hohlprofile können an den Enden Verschlusskappen aufweisen.

Es hat einen nützlichen Effekt, wenn der Träger weitere Vertiefungen in Form von hinterschnittenen Nuten aufweist, an denen weitere zum Schienen-Flurförderer passende Bauteile mit Nutsteinen befestigt werden können.

Diese Nuten sind in der Regel in dem Strangpress- oder Strangziehprofil im Herstellprozess integrierbar. Mittels dieser Nuten sind die unterschiedlichsten Gegenstände leicht anbringbar, was bei Schweißkonstruktionen einen erhöhten Aufwand bedeuten würde. Das können Schilder sein, Lampen, Verbindungslaschen oder ggf. sogar Zug- oder Kopplungsstangen sein.

Vorteilhaft ist der Hohlraum mit einem den Träger versteifenden Material gefüllt.

Als Füllstoff kommen hier insbesondere aushärtbare Kunststoffe oder Schäume in Frage, die wenig Gewicht haben, bei sehr breiten Flurförderern aber erheblich zur Versteifung und Durchbiegungsverminderung beitragen können.

Hinsichtlich des Schienen-Flurförderers wird die Aufgabe dadurch gelöst, dass er wenigstens einen Träger wie zuvor beschrieben aufweist.

Man kann demnach von einem einzelnen Träger ausgehen oder von mehreren gekoppelten Trägern, je nach gewünschter Abmessung des Flurförderers bzw. der zu transportierenden Last.

Dabei ist es vorteilhaft, wenn der Schienenflurförderer mit einer Tragplatte bedeckt ist, die eine zu transportierende Last aufnehmen kann.

Diese Tragplatte kann beispielsweise lösbar sein und durch eine kleinere oder größere Tragplatte ersetzt werden. Sie kann Zentrierstifte aufweisen. Entsprechend beabstandet sind dann ggf. zwei Träger.

Es ist auch vorteilhaft, wenn zwei oder mehr Hohlprofile verbunden übereinander angeordnet sind.

Dadurch kann die Höhe des Flurförderers verändert werden. Oft werden auf den Flurförderern manuell Behandlungsschritte an der zu transportierenden Last durchgeführt. Mit Veränderung der Höhe des Flurförderers sind beispielsweise auch verschiedene Arbeitshöhen einstellbar. Die Hohlprofile können den gleichen Querschnitt haben, wobei die Länge nicht identisch sein muss.

Im alltäglichen Betrieb des nunmehr sehr leichten Flurförderers kann es vorteilhaft sein, wenn er wenigstens eine Transportrolle und einen Handgriff für einen manuellen Transport aufweist.

Insbesondere wenn der Schienentransport des Flurförderers bis zur Last-Entladestation nur in einer Richtung erfolgt, kann der leere Flurförderer aufgrund seines geringen Gewichtes somit manuell zur Startposition zurückgefahren werden.

Im Folgenden wird die Erfindung anhand der darstellenden Zeichnungen erläutert. Es zeigen
Fig. 1 eine dreidimensionale Ansicht eines mit Rädern bestückten Trägers im Wesentlichen von die Unterseite
Fig. 2 einen Querschnitt durch den Träger von Fig. 1 mit einem Teilschnitt durch ein Rad,
Fig. 3 eine dreidimensional Darstellung eines Rades inklusive Radachse auf einer Rundschiene,
Fig. 4 eine Seitenansicht eines erfindungsgemäßen Flurförderers
Fig. 5 zwei übereinander angeordnete Träger-Hohlprofle zur Höhenveränderung.

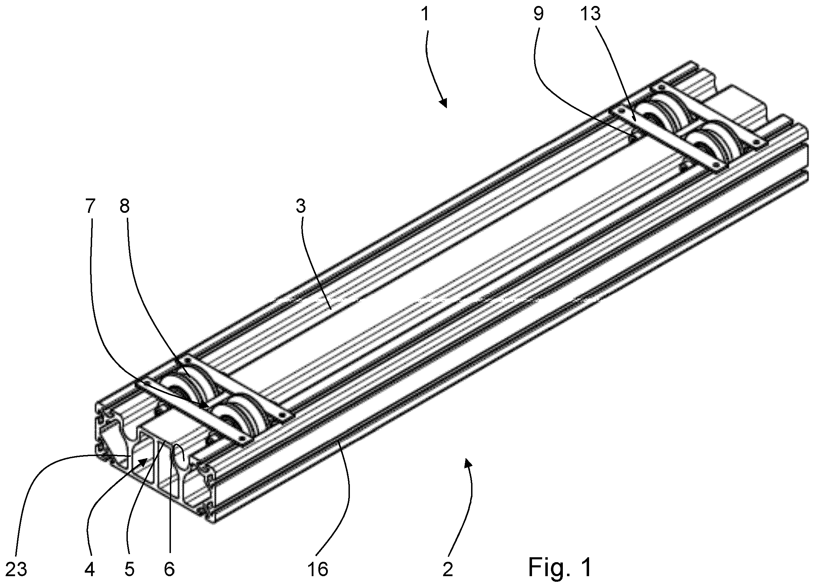

In Fig. 1 ist ein erfindungsgemäßer Träger in dreidimensionaler Form dargestellt, der bereits mit Rädern bestückt einen sehr schmalen kompletten Flurförderer 1 verkörpert. Der Blick geht also im Wesentlichen auf die Unterseite des Trägers 2.

Deutlich erkennbar ist das Hohlprofil 3 als Strangpressprofil, bevorzugt aus Aluminium oder einer Aluminiumlegierung. Alternativ und zeichnerisch genauso dargestellt könnte aber auch ein Strangzieh-Hohlprofil aus einem faserverstärkten Kunststoff sein. Der Blick auf die Stirnseite lässt die Hohlräume 4 erkennen. Sie sind umgeben von der Wandung 5 außen und können in diesem Ausführungsbeispiel auch noch Streben 23 zur Versteifung des Hohlprofils 3 aufweisen. Zusätzlich kann der wenigstens eine Hohlraum 4 mit einem den Träger 2 versteifenden Material gefüllt sein.

Die Wandung 5 weist ein über die gesamte Hohlprofillänge reichende Vertiefung 6 auf. Die Kontur der Vertiefung ist genau der Achse 9 des Rades 8 angepasst. Die Vertiefung könnte im Profil aber auch so gestaltet sein, dass auch ein Lager des Rades 8 genau darin unterbringbar ist. In diesem Ausführungsbeispiel sind die Radachsen mittels Laschen 13 fixiert, aber ggf. noch drehbar.

Die Fig. 1 zeigt einen Träger 2, der mit insgesamt vier Rädern 8 bestückt ist, zwei auf jeder Seite, genau im Abstand der Spurweite der Schienen, auf denen der mit dem Träger versehene Flurförderer fahren soll. Diese Einheit stellt an sich bereits einen schmalen Flurförderer dar.

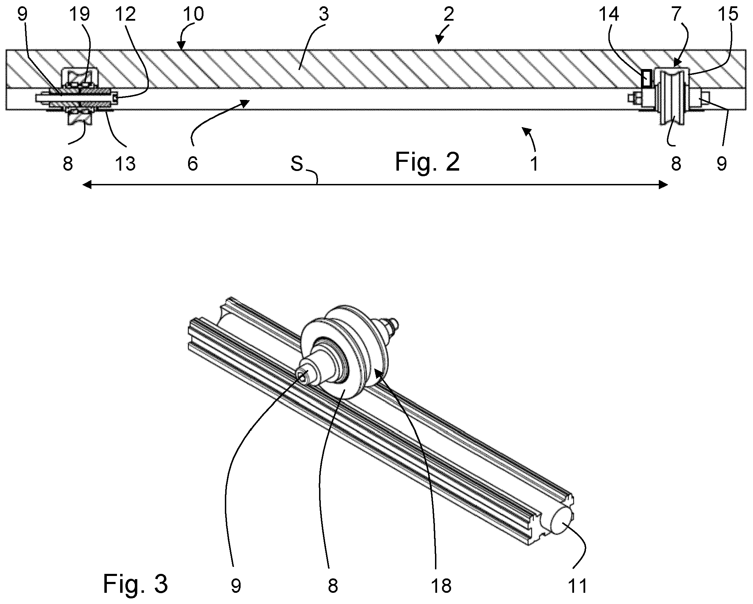

Fig. 2 zeigt einen Längsschnitt durch den Träger 2 nach Fig. 1 und außerdem durch ein Rad (auf der linken Seite). Der schmale Flurförderer 1 besitzt also vier Räder 8 (von denen nur 2 sichtbar sind) und eine Lastauflagefläche 10. Man kann in dieser Ansicht die Aussparung 7 für einen Teil des Rades 8 im Hohlprofil 3 besser erkennen. Die Aussparung 7 kann auch mit einer Einkapselung 15 hin zum Hohlprofil 3 versehen sein, damit von den Rädern kein Schmutz in das Hohlprofil 3 gelangen kann. Die Achsen 9 des Rades 8 liegen genau in der Vertiefung 6. Auf der rechten Seite ist zudem ein Druck- oder Kraftsensor 14 angedeutet, mit dem die Last auf dem Flurförderer bestimmt werden kann.

Der Schnitt durch das Rad inklusive Radachse soll eine Möglichkeit darstellen, wie das Rad 8 in der Vertiefung 6 angeordnet wird. Dabei ist eine Klemmvorrichtung 12 angedeutet, die mit Anziehen einer Schraube die Achse an den Seitenwänden der Vertiefung fest anliegen lässt. Zusätzlich sicher die Lasche 13 ein Herausfallen des Rades aus der Vertiefung. Das Rad selbst dreht auf einem kleinen Rollenlager 19 auf der Achse 9.

In Fig. 3 erkennt man den Vorteil, den der konkav ausgedreht Radumfang 18 bietet, wenn er mit einer von der Anmelderin vertrieben Rundschiene 11 in Kontakt ist. Obwohl die Schiene im Boden versenkbar ist und keine Stolperfalle oder Hindernis darstellt, ist das Rad 8 sicher und stabil in der Spur geführt. Mit dieser Anordnung können auch schwerste Lasten sicher auf dem nun geschaffenen Leichtgewicht-Flurförderer transportiert werden.

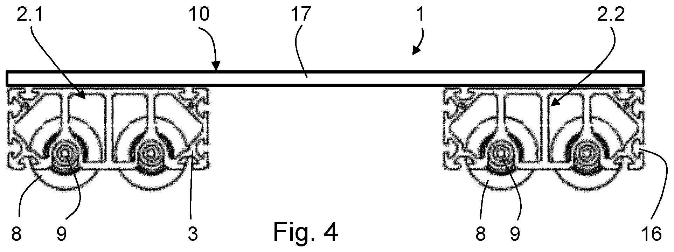

Um die Vielfältigkeit der Einsatzmöglichkeiten des erfindungsgemäßen Schienen-Flurförderers 2 zu zeigen, sind in Fig. 4 zwei derartige Träger 2.1 und 2.2 mit einer Tragplatte 17 versehen. Mit entsprechenden nicht dargestellten Zentrierungen und Verbindungselementen kann auf diese Weise ein Flurförderer 1 mit einer großen Förderfläche geschaffen werden. Die Verbindungselemente können beispielsweise mit Nutensteinen in den am Hohlprofil 3 vorhanden hinterschnittenen Nuten 16 befestigt werden.

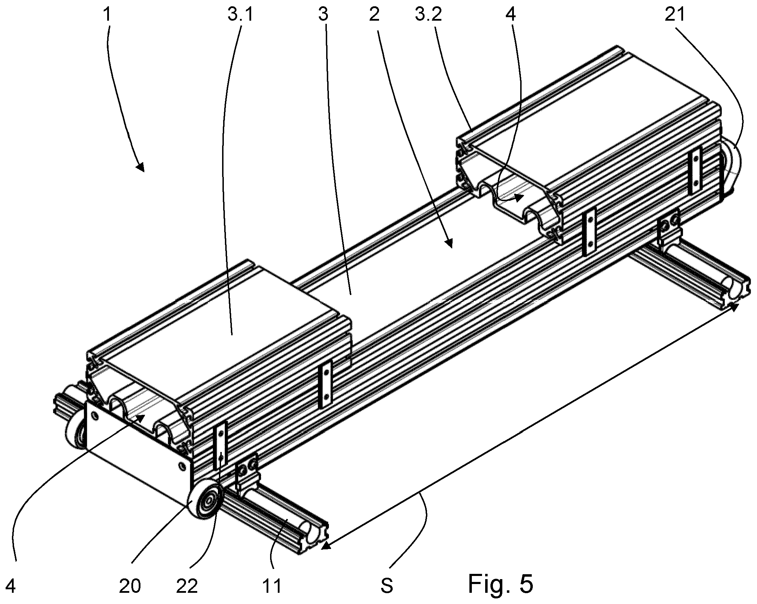

Fig. 5 zeigt, dass über die Hohlprofile 3 auch die Höhe des Flurförderers 1 veränderbar ist, nämlich indem man vorzugsweise gleiche Hohlprofile 3, 3.1, 3.2 aufeinander setzt und ebenfalls mit Verbindungslaschen 22, die beispielsweise über Nutensteine in hinterschnittenen Nuten 16 befestigt sind, fixiert.

Da der gesamte Flurförderer 1 aufgrund der Hohlprofil-Verwendung zu einem relativ leichten Gefährt geworden ist, kann er sogar dann, wenn er keine Last trägt, von nur einer Person abseits der Schienen 11 mit der Spurweite S bewegt werden. Dazu sind in diesem Ausführungsbeispiel gemäß Fig. 5 zusätzliche Transportrollen 20 an dem Flurförderer angebracht und ein Handgriff 21. Mit dem Handgriff wird der Flurförderer auf einer Seite angehoben bis die Rollen auf dem Hallenboden aufsetzen und die Ränder 8 von der Schiene 11 abgehoben sind. Anschließend kann der Flurförderer 1 manuell an einen anderen Ort verschoben werden.

Das Hohlprofil 3 kann selbst den Träger 2 darstellen. Ferner übergreift das Hohlprofil 3 beide Schienen. Das Hohlprofil 3 weist damit selbst eine Länge auf, die die Spurweite der Schienen 11 übergreift.

Der Träger 2 ist bevorzugt einstückig ausgebildet und nahtlos gefertigt.

### Bezugszeichenliste

- 1: Schienen-Flurförderer
- 2, 2.1, 2.2: Träger
- 3, 3.1, 3.2: Hohlprofil
- 4: Hohlraum
- 5: Wandung
- 6: Vertiefung
- 7: Aussparung
- 8: Rad
- 9: Radachse oder -lager
- 10: Lastauflagefläche
- 11: Schiene, Rundschiene
- 12: Klemmvorrichtung
- 13: Lasche
- 14: Druck- oder Kraftsensor
- 15: Einkapselung
- 16: Hinterschnittene Nuten
- 17: Tragplatte
- 18: Konkaver Radumfang
- 19: Rollenlager
- 20: Transportrolle
- 21: Handgriff
- 22: Verbindungslasche
- 23: Strebe
- S: Spurweite

## Patentansprüche

1. Schienen-Flurförderer (1) mit einer Lastauflagefläche (10) und Rädern (8), der auf Schienen (11) verfahrbar ist, umfassend wenigstens einen Träger (2), der ein Hohlprofil (3) umfasst, dessen wenigstens ein Hohlraum (4) von einer Wandung (5) umschlossen ist,
**dadurch gekennzeichnet, dass**
die Wandung (5) auf der zu den Schienen (11) angrenzenden Seite wenigstens eine nutförmige Vertiefung aufweist, in die die Achse oder das Achslager (9) eines oder mehrerer Räder (8) unterbringbar ist und die Wandung (5) eine Aussparung (7) für zumindest einen Teil eines Rades (8) aufweist.

2. Schienen-Flurförderer (1) gemäß Anspruch 1, **dadurch gekennzeichnet, dass** der Träger eine Länge aufweist, die die Spurweite (S) der Schienen (11) übergreift und in der Wandung (5) im Abstand der Spurweite (S) jeweils eine Aussparung (7) für zumindest einen Teil eines Rades (8) vorgesehen ist.

3. Schienen-Flurförderer (1) gemäß Anspruch 1 oder 2, **dadurch gekennzeichnet, dass** sich die Vertiefung (6) über die Trägerlänge erstreckt.

4. Schienen-Flurförderer (1) gemäß einem der Ansprüche 1 bis 3, **dadurch gekennzeichnet, dass** die die Vertiefung (6) in ihrer äußeren Kontur dem Umriss der Achse oder des Achslagers (9) eines oder mehrerer Räder (8) angepasst ist.

5. Schienen-Flurförderer (1) gemäß einem der Ansprüche 1 bis 4, **dadurch gekennzeichnet, dass** er eine lösbare Klemmvorrichtung (12) für die Achse oder das Achslager (9) aufweist.

6. Schienen-Flurförderer (1) gemäß einem der Ansprüche 1 bis 5, **dadurch gekennzeichnet, dass** wenigstens eine die Vertiefung (6) überbrückende Lasche (13) vorgesehen ist, mit der die Radachse oder das Radlager (9) in der Vertiefung (6) fixierbar ist.

7. Schienen-Flurförderer (1) nach einem der Ansprüche 1 bis 6, **dadurch gekennzeichnet, dass** in die Vertiefung (6) wenigstens ein Druck- oder Kraftsensor (14) zwischen Wandung (5) und die Radachse oder das Radlager (9) integriert ist.

8. Schienen-Flurförderer (1) nach einem der Ansprüche 1 bis 7, **dadurch gekennzeichnet, dass** die Aussparung (7) der Wandung (5) für die Räder eine Einkapselung (15) aufweist.

9. Schienen-Flurförderer (1) nach einem der Ansprüche 1 bis 8, **dadurch gekennzeichnet, dass** das Hohlprofil ein Strangpressprofil umfasst.

10. Schienen-Flurförderer (1) nach einem der Ansprüche 1 bis 8, **dadurch gekennzeichnet, dass** das Hohlprofil ein Strangziehprofil umfasst.

11. Schienen-Flurförderer (1) nach einem der Ansprüche 1 bis 10, **dadurch gekennzeichnet, dass** er weitere Vertiefungen in Form von hinterschnittenen Nuten (16) aufweist, an denen weitere zum Schienen-Flurförderer passende Bauteile mit Nutsteinen befestigt werden können.

12. Schienen-Flurförderer (1) nach einem der Ansprüche 1 bis 11, **dadurch gekennzeichnet, dass** der wenigstens eine Hohlraum (4) mit einem den Träger (2) versteifenden Material gefüllt ist.

13. Schienen-Flurförderer (1) nach einem der Ansprüche 1 bis 12, **dadurch gekennzeichnet, dass** wenigstens zwei Träger (2, 2.1, 2.2) durch eine Tragplatte (17) verbunden sind.

14. Schienen-Flurförderer nach einem der Ansprüche 1 bis 13, **dadurch gekennzeichnet, dass** zwei oder mehr Hohlprofile (3, 3.1, 3.2) verbunden übereinander angeordnet sind.

15. Schienen-Flurförderer nach einem der Ansprüche 1 bis 14, **dadurch gekennzeichnet, dass** er wenigstens eine Transportrolle (20) und einen Handgriff (21) für einen manuellen Transport aufweist.

## Claims

1. Rail-type floor conveyor (1) with a load-bearing surface (10) and wheels (8), which is mounted on rails (11), comprising at least one carrier (2) which has a hollow profile (3)the at least one cavity (4) of which is enclosed by a wall (5),
**characterized in that** the wall (5) comprises, on the side adjacent to the rails (11), at least one groove-shaped recess, in which the axle or the axle bearing (9) of one or more wheels (8) can be accommodated, and the wall (5) comprises a cutout (7) for at least one part of a wheel (8).

2. Rail-type floor conveyor (1) according to Claim 1, **characterized in that** the carrier has a length which overlaps the track width (S) of the rails (11), and a respective cutout (7) for at least one part of a wheel (8) is provided in the wall (5) at a distance corresponding to the track width (S).

3. Rail-type floor conveyor (1) according to Claim 1 or 2, **characterized in that** the recess (6) extends over the length of the carrier.

4. Rail-type floor conveyor (1) according to one of Claims 1 to 3, **characterized in that** the outer contour of the recess (6) is adapted to the contour of the axle or of the axle bearing (9) of one or more wheels (8).

5. Rail-type floor conveyor (1) according to one of Claims 1 to 4, **characterized in that** it comprises a releasable clamping device (12) for the axle or the axle bearing (9).

6. Rail-type floor conveyor (1) according to one of Claims 1 to 5, **characterized in that** at least one lug (13) bridging the recess (6) is provided for fixing the wheel axle or the wheel bearing (9) in the recess (6).

7. Rail-type floor conveyor (1) according to one of Claims 1 to 6, **characterized in that** at least one pressure or force sensor (14) is integrated in the recess (6) between the wall (5) and the wheel axle or the wheel bearing (9).

8. Rail-type floor conveyor (1) according to one of Claims 1 to 7, **characterized in that** the cutout (7) of the wall (5) for the wheels comprises an encapsulation (15).

9. Rail-type floor conveyor (1) according to one of Claims 1 to 8, **characterized in that** the hollow profile comprises an extruded profile.

10. Rail-type floor conveyor (1) according to one of Claims 1 to 8, **characterized in that** the hollow profile comprises an pultruded profile.

11. Rail-type floor conveyor (1) according to one of Claims 1 to 10, **characterized in that** it comprises further recesses in the form of undercut grooves (16) on which further components matching the rail-type floor conveyor can be fastened by means of sliding blocks.

12. Rail-type floor conveyor (1) according to one of Claims 1 to 11, **characterized in that** the at least one cavity (4) is filled with a material which stiffens the carrier (2).

13. Rail-type floor conveyor (1) according to one of Claims 1 to 12, **characterized in that** at least two carriers (2, 2.1, 2.2) are connected by means of a carrier plate (17).

14. Rail-type floor conveyor according to one of Claims 1 to 13, **characterized in that** two or more hollow profiles (3, 3.1, 3.2) are arranged one above the other in a connected manner.

15. Rail-type floor conveyor according to one of Claims 1 to 14, **characterized in that** it comprises at least one transport roller (20) and a handle (21) for manual transport.

## Revendications

1. Convoyeur au sol monté sur rails (1) ayant une surface d'application de charge (10) et des roues (8) qui peuvent être déplacées sur des rails (11), comprenant au moins un support (2) qui comprend un profilé creux (3), dont au moins une cavité (4) est entourée par une paroi (5),
**caractérisé en ce que**
la paroi (5) du côté adjacent aux rails (11) comporte au moins un espace creux en forme de rainure, dans lequel l'essieu ou le palier d'essieu (9) d'une ou plusieurs roues (8) peut être placé et la paroi (5) comporte un évidement (7) pour au moins une partie d'une roue (8).

2. Convoyeur au sol monté sur rails (1) selon la revendication 1, **caractérisé en ce que** le support a une longueur qui couvre l'écartement (S) des rails (11) et qu'un évidement (7) est respectivement prévu pour au moins une partie d'une roue (8) dans la paroi (5) à une certaine distance de l'écartement (S).

3. Convoyeur au sol monté sur rails (1) selon la revendication 1 ou 2, **caractérisé en ce que** l'espace creux (6) s'étend sur la longueur du support.

4. Convoyeur au sol monté sur rails (1) selon l'une des revendications 1 à 3, **caractérisé en ce que** l'espace creux (6) a un contour extérieur adapté au contour de l'essieu ou du palier d'essieu (9) d'une ou plusieurs roues (8).

5. Convoyeur au sol monté sur rails (1) selon l'une des revendications 1 à 4, **caractérisé en ce qu'**il comporte un dispositif de serrage détachable (12) pour l'essieu ou le palier d'essieu (9).

6. Convoyeur au sol monté sur rails (1) selon l'une des revendications 1 à 5, **caractérisé en ce qu'**au moins une éclisse (13) s'étendant au-dessus de l'espace creux (6) est prévue, au moyen de laquelle l'essieu de roue ou le palier de roue (9) peut être fixé dans l'espace creux (6).

7. Convoyeur au sol monté sur rails (1) selon l'une des revendications 1 à 6, **caractérisé en ce qu'**au moins un capteur de pression ou de force (14) est intégré dans l'espace creux (6) entre la paroi (5) et l'essieu de roue ou le palier de roue (9).

8. Convoyeur au sol monté sur rails (1) selon l'une des revendications 1 à 7, **caractérisé en ce que** l'évidement (7) de la paroi (5) comporte une encapsulation (15) pour les roues.

9. Convoyeur au sol monté sur rails (1) selon l'une des revendications 1 à 8, **caractérisé en ce que** le profilé creux comprend un profilé extrudé.

10. Convoyeur au sol monté sur rails (1) selon l'une des revendications 1 à 8, **caractérisé en ce que** le profilé creux comprend un profilé extrudé par étirage.

11. Convoyeur au sol monté sur rails (1) selon l'une des revendications 1 à 10, **caractérisé en ce qu'**il comporte des évidements supplémentaires sous forme de rainures en contre-dépouille (16) sur lesquelles peuvent être fixés des composants supplémentaires adaptés au convoyeur au sol monté sur rails, avec des clavettes rainurées.

12. Convoyeur au sol monté sur rails (1) selon l'une des revendications 1 à 11, **caractérisé en ce que** la au moins une cavité (4) est remplie d'un matériau de renforcement du support (2).

13. Convoyeur au sol monté sur rails (1) selon l'une des revendications 1 à 12, **caractérisé en ce qu'**au moins deux supports (2, 2.1, 2.2) sont reliés par une plaque de support (17).

14. Convoyeur au sol monté sur rails selon l'une des revendications 1 à 13, **caractérisé en ce que** deux profilés creux (3, 3.1, 3.2) ou plus sont agencés assemblés l'un à l'autre.

15. Convoyeur au sol monté sur rails selon l'une des revendications 1 à 14, **caractérisé en ce qu'**il comporte au moins un galet de transport (20) et une poignée (21) pour un transport manuel.
